# EUROPEAN PATENT SPECIFICATION

(11) **EP 1 384 575 B1**
(45) Date of publication and mention of the grant of the patent: **07.11.2007**
(21) Application number: 03254601.2
(22) Date of filing: 24.07.2003
(51) Int. Cl.: B32B 27/00, C09J 7/02

(54) **Laminate sheet and producing methods therefor**
Laminatfilme und Verfahren zu deren Herstellung
Feuille stratifiée et Procedés de Production de celles-ci

(30) Priority: 24.07.2002 JP 2002214781
(43) Date of publication of application: 28.01.2004
(73) Proprietor: Lintec Corporation, Tokyo 173-0001 (JP)
(72) Inventor: Katoh, Kazuya, Saitama-shi, Saitama (JP); Kubota, Shin, Yokohama-shi, Kanagawa (JP); Miyata, Sou, Matsudo-shi, Chiba (JP)
(74) Representative: Nicholls, Michael John

(56) References cited:
- EP-A- 1 246 236
- EP-A- 1 310 432
- EP-A- 1 347 449
- PATENT ABSTRACTS OF JAPAN vol. 2002, no. 09, 4 September 2002 (2002-09-04) & JP 2002 141309 A (LINTEC CORP), 17 May 2002 (2002-05-17)

## Description

The present invention relates to a laminate sheet comprising a long release sheet, an adhesive layer and a base material, which are laminated together, and more particularly to a laminate sheet wherein the surface smoothness of the adhesive layer can be kept even when the laminate sheet is wound into a roll.

In the majority of cases, a laminate sheet, which comprises a long release sheet, an adhesive layer and a base material laminated together, is wound into a roll, transported and stored in the form of such a roll, unrolled from such a roll and punched out into a desired shape prior to the practical use thereof.

However, when a laminate sheet is wound into a roll, a winding pressure is applied onto the laminate sheet. Therefore, the adhesive layer, which is softer than the other layers present in the laminate sheet, is deformed with the elapse of time due to the action of the winding pressure, and the adhesive layer is in a so-called "orange peel" state mainly due to the lost of the surface smoothness of the adhesive layer. This accordingly causes a problem such that the adhesive layer lacks in the uniformity of its thickness.

Moreover, in some cases, foreign substances (of which diameter is in general ranges from 5 to 50 µm) such as fine dust are caught between the layers of the wound laminate sheet, when winding the sheet into a roll. In case of winding a laminate sheet into a roll while catching such foreign substances between the rolled layers thereof, the base material and the adhesive layer of the laminate sheet are thus locally deformed by the presence of such foreign substances.

When the foregoing adhesive layer, which is in the orange peel condition or which is locally deformed, is used in the adhesion of, for instance, a cover sheet for the protection of a recording layer on an optical disk for the next generation (Blu-ray-Disc) having a high capacity and/or a high recording density, the resulting optical disk may cause errors in reading or writing data because of the lack in the surface smoothness of the adhesive layer.

Alternatively, when an adhesive layer in the orange peel condition is used in, for instance, the adhesion of the anti-reflection film for a display device such as PDA (Personal Digital Assistants), other problems arise, for instance, the transparency of the display device is impaired and the clearness of images displayed thereon is reduced.

The present invention has been developed while taking into consideration the foregoing circumstances and accordingly, it is an object of the present invention to provide a laminate sheet in which the surface smoothness of its adhesive layer can be kept even when the sheet is wound into a roll as well as a producing method therefore.

The invention provides a laminate sheet roll according to claim 1. (invention (1)). Note that, the "base material" used herein may be a sheet made from any desired material or a release sheet. Moreover, the term "a principally used portion of the adhesive layer" used herein means a portion where a smoothness of the surface of the adhesive layer is required.

In the foregoing invention (1), the protective material is provided on the portion of the base material of the laminate sheet, which corresponds to the portion other than the principally used portion of the adhesive layer and the protective material may serve as a spacer, therefore the release sheet wound and superimposed on the adhesive layer is not strongly pressed against the principally used portion of the adhesive layer. This in turn leads to the restraint of the formation of orange peel on the principally used portion of the adhesive layer due to the winding pressure and accordingly, the surface smoothness of the principally used portion of the adhesive layer can be kept.

Moreover, even when foreign substances such as fine dust are caught between the neighboring wound and superimposed layers of the laminate sheet upon winding the same into a roll, because there are interstices between the surface of the base material and the back surface of the release sheet, the formation of any depression on the base material and the adhesive layer due to the presence of such foreign substances are restrained.

In the foregoing invention (1), it is preferred that the central portion of the adhesive layer in the widthwise direction thereof is the principally used portion of the adhesive layer, while the protective material is provided on the both sides of the base material in the widthwise direction thereof (invention (2)). If the laminate sheet has such a constitution, the surface smoothness of the adhesive layer is effectively kept when the laminate sheet is wound into a roll.

The invention also provides a laminate sheet roll according to claim 3. (invention (3)).

In the foregoing invention (3), the protective material is provided on the portion of the back surface of the release sheet, which corresponds to the portion other than the principally used portion of the adhesive layer and the protective material may serve as a spacer, therefore the release sheet wound and superimposed on the adhesive layer is not strongly pressed against the principally used portion of the adhesive layer. This in turn leads to the restraint of the formation of orange peel on the principally used portion of the adhesive layer due to the winding pressure and accordingly, the surface smoothness of the principally used portion of the adhesive layer can be kept.

Moreover, even when foreign substances such as fine dust are caught between the neighboring wound and superimposed layers of the laminate sheet upon winding the same into a roll, because there are interstices between the surface of the base material and the back surface of the release sheet the formation of any depression on the base material and the adhesive layer due to the presence of such foreign substances are restrained.

In the foregoing invention (3), it is preferred that the central portion of the adhesive layer in the widthwise direction thereof is the principally used portion of the adhesive layer, while the protective material is provided on the both sides of the back surface of the release sheet in the widthwise direction thereof (invention (4)). If the laminate sheet has such a constitution, the surface smoothness of the adhesive layer is effectively kept when the laminate sheet is wound into a roll.

The invention further provides a producing method according to claim 5. (invention (5)).

The present invention further provides a producing method according to claim 6. (invention (6)). Examples of methods for providing a protective material are a method in which a protective sheet provided with an adhesive layer is laminated with the base material, a method of ink printing and a method of coating application.

According to the foregoing inventions (5, 6), the laminate sheets described above (invention 1 to 4) can efficiently be produced.

The invention will now be further described, by way of example only, with reference to the accompanying drawings, in which:
Fig. 1 is a perspective view showing a laminate sheet according to a first embodiment of the present invention.
Fig. 2 is a perspective view showing a roll of the laminate sheet according to the first embodiment of the present invention.
Fig. 3 is a cross sectional view illustrating an example of the producing method for the laminate sheet according to the first embodiment of the present invention.
Fig. 4 is a cross sectional view illustrating another example of the producing method for the laminate sheet according to the first embodiment of the present invention.
Fig. 5 is a perspective view showing a laminate sheet according to a second embodiment of the present invention.
Fig. 6 is a perspective view showing a roll of the laminate sheet according to the second embodiment of the present invention.

The present invention will hereunder be described in more detail with reference to the accompanying drawings.

### [First Embodiment]

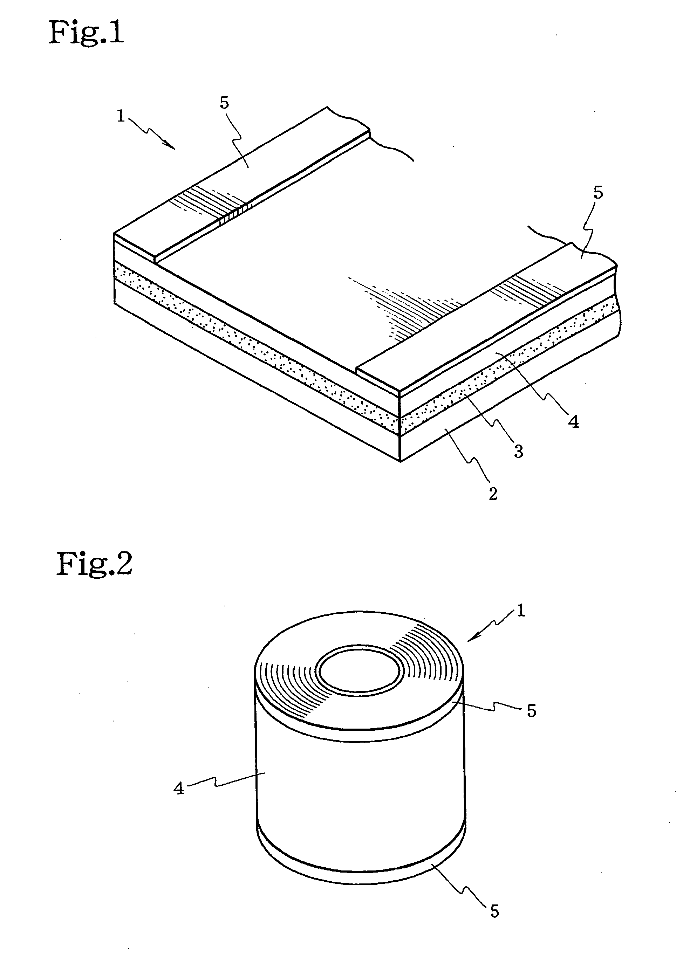

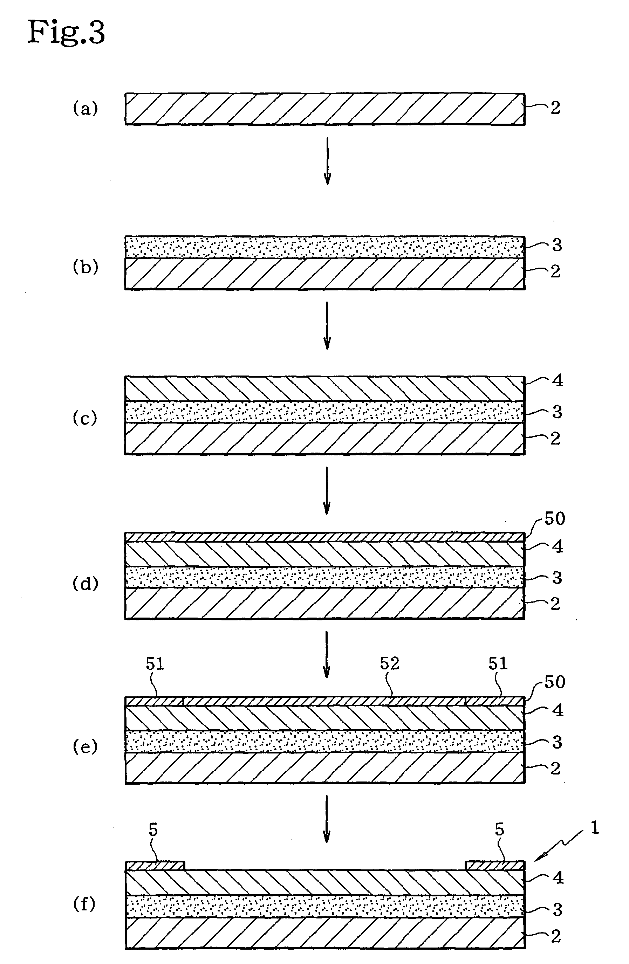

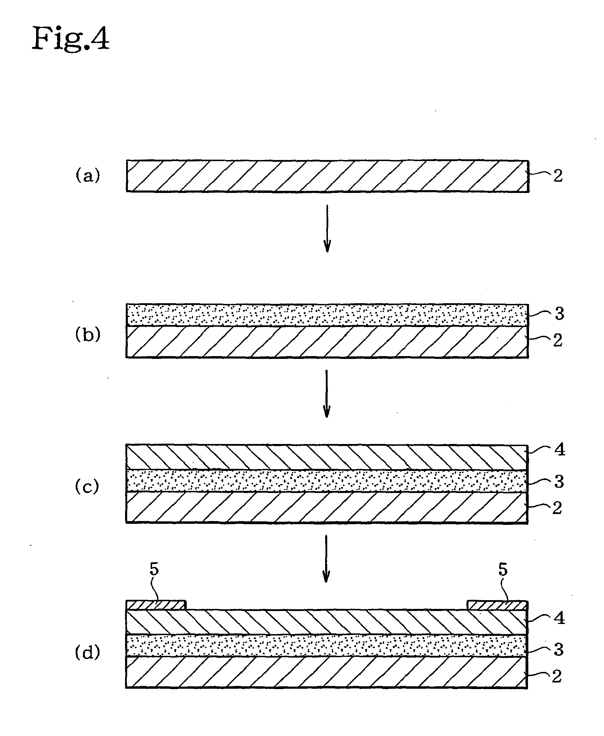

Fig. 1 is a perspective view showing a laminate sheet according to a first embodiment of the present invention; Fig. 2 is a perspective view showing a roll of the laminate sheet according to the first embodiment; Figs. 3(a) to (f) are cross sectional views for illustrating an example of the producing method for the laminate sheet according to the first embodiment; and Figs. 4 (a) to (d) are cross sectional views for illustrating another example of the producing method for the laminate sheet according to the first embodiment.

### 1. Laminate Sheet

As shown in Fig. 1, a laminate sheet 1 according to this embodiment comprises a long release sheet 2, an adhesive layer 3 formed on the release surface of the release sheet 2, a base material 4 formed on the adhesive layer 3 and a protective material 5 provided on the both sides of the surface of the base material 4 in the widthwise direction thereof.

A well-known sheet may be used as the release sheet 2. For example, resin films such as a polyethylene terephthalate film or polypropylene film, or paper such as glassine paper, clay-coated paper, or laminated paper (mainly polyethylene laminated paper) which has been subjected to release treating using a silicone type release agent or the like may be used.

The surface roughness (Ra) of the release surface of the release sheet 2 may be decided in accordance with the smoothness to be imparted to the adhesive layer 3, but it is in general not more than 0.5 µm and preferably not more than 0.1 µm. In addition, the thickness of the release sheet 2 in general is about 10 to 200 µm and preferably about 20 to 100 µm.

The adhesive layer 3 may be one, which is released from the release sheet 2 and used for adhering the base material 4 to a desired subject to be adhered or may be one, which is released from the release sheet 2 and the base material 4 and used for adhering desired subjects to be adhered to one another. In this embodiment, the central portion of the adhesive layer 3 in the widthwise direction thereof constitutes the principally used portion thereof (a portion where the surface smoothness of the adhesive layer is required).

The adhesive constituting the adhesive layer 3 may be various kinds of adhesives, which are appropriately selected in accordance with the applications of the adhesive layer 3 or the base material 4.

The adhesive usable herein may be pressure sensitive adhesives or curable adhesives. The pressure sensitive adhesives may be, for instance, acrylic type, polyester type, urethane type, rubber type and silicone type ones, as well as curable pressure sensitive adhesives. Examples of curable adhesives are radiation-curable adhesives such as energy rays-curable adhesives and heat-curable adhesives.

The thickness of the adhesive layer 3 in general is about 5 to 100µm and preferably about 10 to 30µm.

The base material 4 may be one, which is adhered to a desired subject with the adhesive layer 3 or may be a release sheet released from the adhesive layer 3. In case of the former, the base material 4 is used as an adhesive sheet together with the adhesive layer 3 and the central portion thereof in the widthwise direction may serve as the principally used portion.

When the base material 4 is used as an adhesive sheet, a variety of materials may be selected as a material for the base material 4 in accordance with the applications of the base material 4. For instance, when the base material 4 is used as a cover sheet for the recording layer of an optical disk, resins such as polycarbonate, poly (methyl methacrylate), polystyrene and the like may be selected as the material for the base material 4. Alternatively, when the base material 4 is, for instance, used as a film for a display of PDA or the like, resins, for instance, cellulose esters such as cellulose di-acetate, cellulose triacetate and cellulose acetate butyrate; polyesters such as polyethylene terephthalate and polybutylene terephthalate; polyolefins such as polyethylene and polypropylene; polyamides; polyimides; polyvinyl chlorides; poly (methyl methacrylate); polycarbonates; and polyurethanes may be selected as the material for the base material 4. These base materials constituted by such resins may be used after subjecting the surface thereof to an anti-reflection treatment or an anti-glare treatment.

When the base material 4 is used as an adhesive sheet, the thickness thereof is determined in accordance with the applications of the base material 4, but the thickness is in general about 25 to 300 µm and preferably about 50 to 200µ m.

On the other hand, when the base material 4 is a release sheet, similar materials to those of the foregoing release sheet 2 may be selected as the material for the base material 4. In this case, however, it is preferred that one of the release sheet 2 and the base material 4 is constituted by a light-release sheet and the other is constituted by a heavy-release sheet.

The protective material 5 may be one formed by entirely laminating a protective sheet with the base material 4 and then cutting off a part of the protective sheet; one formed by laminating a protective sheet which has been, in advance, configured into a desired shape and a desired size on a desired position of the base material 4; or those formed by printing ink or applying a coating onto a desired position of the base material 4.

The protective sheets preferably used herein include, for instance, those comprising base materials such as resin films, paper and metal foils to which an adhesive layer is formed.

Examples of base materials for the protective sheets are resin films constituted by a resin such as polyethylene, polypropylene, polybutene, polybutadiene, polyvinyl chloride, ionomers, ethylene-methacrylic acid copolymers, polyethylene terephthalate, polyethylene naphthalate, polybutylene terephthalate, polyimides, polyether imides, polyaramides, polyether ketones, polyether ether ketones, polyphenylene sulfides, poly(4-methylpentene-1) and poly(tetrafluoro-ethylene), a crosslinked resin of the above resin, or a laminated body of such resin films.

The adhesive which constitutes the adhesive layer of the protective sheet is preferably a pressure sensitive adhesive. In this case, the protective material 5 may be attached by pressure onto the base material 4. Any one of an acrylic type, polyester type, urethane type, rubber type, silicone type, ethylene-vinyl acetate type, or other pressure sensitive adhesive may be used, and this may be curable pressure sensitive adhesive.

On the other hand, when the protective material 5 is formed by printing ink or applying a coating, the kinds of ink and coatings as well as printing methods or applying methods are not restricted to specific ones at all.

The thickness of the protective material 5 is preferably between 5 and 100µm, and more preferably between 25 and 50µm. If the thickness of the protective material 5 is less than 5µm, the effects of the present invention cannot be obtained sufficiently, and if the thickness of the protective material 5 exceeds 100µm, the diameter (volume) of the roll obtained when the laminate sheet 1 is wound becomes too large.

### 2-1. Producing Method for Laminate Sheet (1)

An example of the producing method for the laminate sheet 1 according to the present embodiment will be described below.

In this producing method, first, an adhesive layer 3 is formed on the release surface of a long release sheet 2 as shown in Figs. 3(a) to (b).

To form the adhesive layer 3, for example, a coating agent containing the adhesive which constitutes the adhesive layer 3 and, if desired, a solvent is prepared. The coating agent is then applied to the release surface of the release sheet 2 using a coating machine such as a kiss roll coater, a reverse roll coater, a knife coater, a roll knife coater, or a die coater, and dried.

Then a base material 4 is attached by pressure to the surface of the adhesive layer 3 as shown in Fig. 3(c) and a protective sheet 50 is attached by pressure to the surface of the base material 4 as shown in Fig. 3 (d) . In this connection, the protective sheet 50 usable herein may be a laminate of a base material and a pressure sensitive adhesive as has been discussed above.

Thereafter, the protective sheet 50 is divided into both side portions 51 and a central portion 52 by cutting only the protective sheet 50 without reaching the base material 4 as shown in Fig. 3 (e) . The cutting of the protective sheet 50 may be conducted according to the usual method, for instance, a punching machine or the like may be used for the cutting. In this respect, the width of the both side portions 51 of the protective sheet 50 is configured in such a manner that the both side portions 51 do not overlap with the principally used portion of the adhesive layer 3.

The central portion 52 formed by cutting the protective sheet 50 is removed as shown in Fig. 3(f). In this state, the both side portions 51 of the protective sheet 50 serve as the protective material 5.

### 2-2. Producing Method for Laminate Sheet (2)

Another example of the producing method for the laminate sheet 1 according to the present embodiment will be described below.

In this producing method, first, an adhesive layer 3 is formed on the release surface of a long release sheet 2 as shown in Figs. 4(a) to (b), and then a base material 4 is attached by pressure to the surface of the adhesive layer 3 as shown in Fig. 4(c).

Thereafter, protective materials 5 are laminated onto both sides of the base material 4 in the widthwise direction thereof as shown in Fig. 4(d). The protective material may be a protective sheet which has been, in advance, configured into a desired shape and a desired size or those formed by printing ink or applying a coating. In the latter case, for instance, an ink or coating containing a vehicle such as urethane resin or acrylic resin may be printed using a method such as lithography or relief-printing, or applied using a method such as spraying or brushing. Incidentally, the width of the protective material 5 is configured in such a manner that the protective material 5 does not overlap with the principally used portion of the adhesive layer 3.

In this embodiment, the above protective material 5 is laminated in the final process, but the method of the present invention is not restricted to such a specific embodiment and the lamination process of the protective material 5 may be carried out in any step of the producing method for the laminate sheet 1.

### 3. Roll of Laminate sheet

When the laminate sheet 1 according to this embodiment is wound into a roll as shown in Fig.2, the protective material 5 is formed on the portion of the base material 4 of the laminate sheet 1, which corresponds to the portion other than the principally used portion of the adhesive layer 3 and the protective material 5 may serve as a spacer, therefore the release sheet 2 wound and superimposed on the adhesive layer 3 is not strongly pressed against the principally used portion of the adhesive layer 3. This in turn leads to the restraint of the formation of orange peel on the principally used portion of the adhesive layer 3 due to the winding pressure and accordingly, the surface smoothness of the principally used portion of the adhesive layer 3 can be kept.

Further, even when foreign substances such as fine dust are caught between the neighboring wound and superimposed layers of the laminate sheet 1 upon winding the same into a roll, because there are interstices between the surface of the base material 4 and the back surface of the release sheet 2, the formation of any depression on the base material 4 and the adhesive layer 3 due to the presence of such foreign substances are restrained if the diameter of the foreign substances is smaller than the size of the interstices.

Furthermore, in a conventional roll, even if only one foreign substance is caught, the effect thereof causes depressions to form in a plurality of overlapped base materials 4 and adhesive layers 3. In the roll of the laminate sheet 1 according to this embodiment, however, the release sheet 2, adhesive layer 3 and base material 4 can be displaced in the radial direction of the roll by the size of the interstice, and thus even if a foreign substance with a larger diameter than the size of the interstice becomes attached to the base material 4, the effect thereof on overlapped base materials 4 and adhesive layers 3 can be suppressed such that depressions caused by the foreign substance can be prevented from forming on a plurality portions of the base material 4 and adhesive layer 3.

### 4. Use of Laminate Sheet

To use the laminate sheet 1 wound into a roll as has been described above, the laminate sheet 1 is unrolled from the roll and a principally used portion of the base material 4 and the adhesive layer 3 are cut into a desired shape and removed from the release sheet 2. The cutting may be conducted according to the usual method, for instance, a punching machine may be used for the cutting.

The surface of the adhesive layer 3 thus cut maintains its smoothness. Therefore, when the adhesive layer 3 is used for the adhesion of a cover sheet for the protection of the recording layer on an optical disk, the occurrence of any error in reading or writing data due to the adhesive layer 3 can be prevented. Further, when the adhesive layer 3 is used in the adhesion of the anti-reflection film for a display, the presence of the adhesive layer 3 does not impair the transparency of the display and the clearness of images displayed thereon.

### [Second Embodiment]

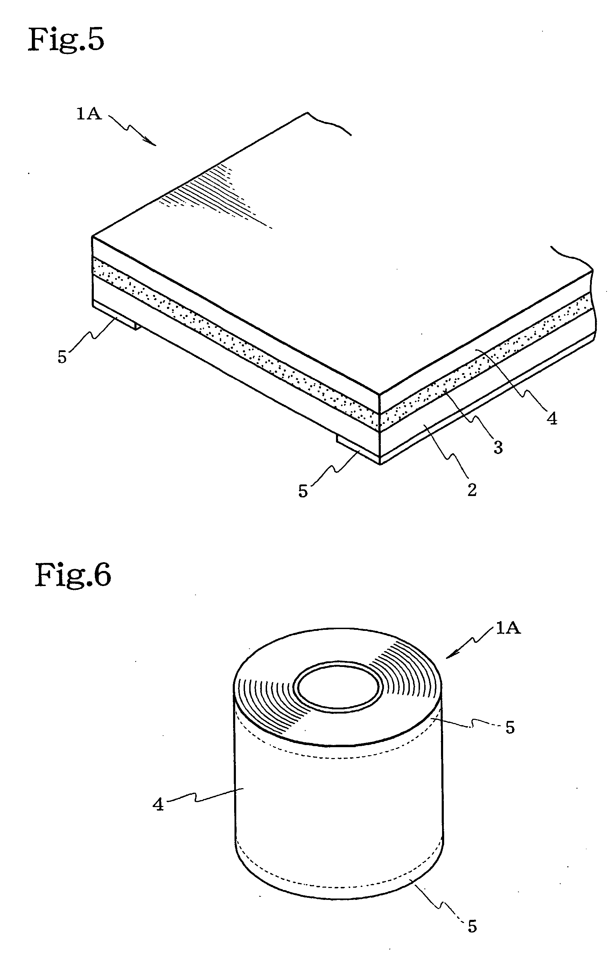

Fig. 5 is a perspective view showing a laminate sheet according to a second embodiment of the present invention and Fig. 6 is a perspective view showing a roll of the laminate sheet according to the second embodiment of the present invention.

The laminate sheet 1A according to this embodiment comprises, as shown in Fig. 5, a long release sheet 2, an adhesive layer 3 formed on the release surface of the release sheet 2, a base material 4 formed on the adhesive layer 3 and a protective material 5 provided on both sides of the back surface (the face opposite to the release surface) of the release sheet 2.

The materials and thicknesses for the release sheet 2, the adhesive layer 3, the base material 4 and the protective material 5 are similar to the materials and thicknesses for the release sheet 2, the adhesive layer 3, the base material 4 and the protective material 5 constituting the laminate sheet 1 according to the aforementioned first embodiment.

The laminate sheet 1A according to this embodiment can be produced by a similar method to the producing method for the laminate sheet 1 according to the aforementioned first embodiment except that the protective material 5 is not provided on the surface of the base material 4, but on the back surface of the release sheet 2.

When the laminate sheet 1A according to this embodiment is wound into a roll as shown in Fig.6, the protective material 5 is formed on the portion of the back surface of the release sheet 2 of the laminate sheet 1A, which corresponds to the portion other than the principally used portion of the adhesive layer 3 and the protective material 5 may serve as a spacer, therefore the release sheet 2 wound and superimposed on the adhesive layer 3 is not strongly pressed against the principally used portion of the adhesive layer 3. This in turn leads to the restraint of the formation of orange peel on the principally used portion of the adhesive layer 3 due to the winding pressure and accordingly, the surface smoothness of the principally used portion of the adhesive layer 3 can be kept.

Further, even when foreign substances such as fine dust are caught between the neighboring wound and superimposed layers of the laminate sheet 1A upon winding the same into a roll, because there are interstices between the surface of the base material 4 and the back surface of the release sheet 2, the formation of any depression on the base material 4 and the adhesive layer 3 due to the presence of such foreign substances are restrained if the diameter of the foreign substances is smaller than the size of the interstices.

Furthermore, in a conventional roll, even if only one foreign substance is caught, the effect thereof causes depressions to form in a plurality of overlapped base materials 4 and adhesive layers 3. In the roll of the laminate sheet 1A according to this embodiment, however, the release sheet 2, adhesive layer 3 and base material 4 can be displaced in the radial direction of the roll by the size of the interstice, and thus even if a foreign substance with a larger diameter than the size of the interstice becomes attached to the base material 4, the effect thereof on overlapped base materials 4 and adhesive layers 3 can be suppressed such that depressions caused by the foreign substance can be prevented from forming on a plurality portions of the base material 4 and adhesive layer 3.

### [Other Embodiments]

The embodiments, which have been explained above are herein given for making the understanding of the present invention easier and do not restrict the scope of the present invention at all. Therefore, it is herein intended that all of the elements disclosed in the foregoing embodiments should include any change of design and equivalents falling within the technical scope of the present invention.

For instance, the shape of the protective material 5 is not restricted to a band-like shape having a uniform width, and the end portion of the protective material 5 on the side of the center in the widthwise direction of the laminate sheet 1, 1A may have any shape such as a waved shape so that it corresponds to the shape of the principally used portion of the adhesive layer 3.

### [Examples]

The present invention will hereunder be described in more detail with reference to, for instance, the following Examples, but the scope of the present invention is not restricted to these specific examples or the like at all.

### [Example 1]

A protective film (PAC2-70, manufactured by Sun A Kaken Co., Ltd., thickness: 70µm) serving as a protective sheet was stuck to one face of a polycarbonate film (Pure Ace C110-75, manufactured by Teijin Ltd., width: 150 mm, length: 100 m, thickness: 75µm) serving as a base material by attaching them with pressure.

On the other hand, one part by weight of a poly (isocyanate) compound (Colonate L, manufactured by Nippon Polyurethane Industry Co.,Ltd.) as a cross-linking agent was added to 100 parts by weight of a copolymer obtained by copolymerizing 98 parts by weight of butyl acrylate with 2 parts by weight of acrylic acid, then 200 parts by weight of ethyl acetate as a diluting solvent was added to them to obtain a coating agent of pressure sensitive adhesive.

The aforementioned coating agent of pressure sensitive adhesive was applied using a knife coater to a release surface of a release sheet (SP-PET3811, manufactured by LINTEC Corporation, thickness: 38µm) constituted by a silicone type release agent applied to one face of a polyethylene terephthalate film so as to reach a thickness of 25µm following drying, and the coating agent on the release sheet was dried for three minutes at 100°C.

The polycarbonate film side of the protective film-attached base material described above was pressed onto the pressure sensitive adhesive layer formed in this manner. The central portion (width: 130 mm) of the protect film in the widthwise direction of the film was then punched out and removed from the base material to form protective materials each having a width of 10 mm, a length of 100 m and a thickness of 70 µm at the both sides in the widthwise direction on one face of the base material.

The long laminate sheet having a width of 150 mm and a length of 100 m thus produced was wound onto a three-inch diameter ABS (acrylonitrile-butadiene-styrene resin) core at an initial winding tension of 12N and a taper ratio of 50% to form a roll.

The resulting roll of the laminate sheet was placed for one month in an atmosphere of 23°C and 50% relative humidity, after which the release sheet was removed and the state of the adhesive sheet (adhesive layer + base material + protective material) was observed using a mercury vapor lamp projection method. Mercury vapor lamp projection was performed by disposing the adhesive sheet between a mercury vapor lamp (light source: SX-01250HQ, mercury vapor lamp power source: BA-H250, manufactured by Ushio Inc.) and a white projection screen and visually observing the projection of the adhesive sheet on the projection screen. The distance between the mercury vapor lamp and the adhesive sheet was set at 170cm, and the distance between the adhesive sheet and the projection screen was set at 30cm.

As a result, any orange peel on the adhesive surface was not observed in the central portion of the adhesive sheet in the widthwise direction of the adhesive sheet, and the surface conditions of the adhesive layer was excellent.

### [Example 2]

An acrylic type pressure sensitive adhesive (PL SHIN, manufactured by LINTEC Corporation) was applied onto a base material constituted by a polyethylene terephthalate film having a thickness of 25 µm in such a manner that the thickness of the adhesive layer determined after drying was equal to 20 µm to thus form a protective sheet having a width of 10 mm and a length of 100 m.

An adhesive layer was formed on a release surface of a release sheet in a similar manner to the Example 1. A base material constituted by a polycarbonate film (Pure Ace C110-75, manufactured by Teijin Ltd., width: 150 mm, length: 100 m, thickness: 75 µm) was attached by pressure onto the adhesive layer, and the foregoing protective sheet was stuck to both sides of the back surface of the release sheet in the widthwise direction of the sheet to form a protective material.

The long laminate sheet having a width of 150 mm and a length of 100 m thus produced was wound onto an ABS core in a similar manner to the Example 1 to thus form a roll.

The resulting roll of the laminate sheet was placed for one month in an atmosphere of 23°C and 50% relative humidity, after which the protective material-attached release sheet was removed and the state of the adhesive sheet (adhesive layer + base material) was observed using a mercury vapor lamp projection method in a similar manner to the Example 1.

As a result, any orange peel on the adhesive surface was not observed in the central portion of the adhesive sheet in the widthwise direction of the sheet, and the surface conditions of the adhesive layer was excellent.

### [Comparative Example 1]

A roll of laminate sheet was produced in a similar manner to the Example 1 except that any protect film was not used (any protective material was not formed) . The resulting roll of the laminate sheet was observed using a mercury vapor lamp projection method in a similar manner to the Example 1. As a result, orange peel was observed throughout the entire surface of the adhesive layer.

As has been discussed above, according to the laminate sheet of the present invention, the surface smoothness of the adhesive layer can be kept even when the laminate sheet is wound into a roll. Moreover, according to the producing method for laminate sheet of the present invention, a laminate sheet, in which the surface smoothness of the adhesive layer can be kept even when the laminate sheet is wound into a roll, can be obtained.

## Claims

1. A laminate sheet roll formed by winding a laminate sheet (1), the roll comprising;
a long release sheet (2);
an adhesive layer (3) formed on the whole of the release surface of the release sheet (2);
a base material (4) formed on the whole of the adhesive layer (3); and
a protective material (5) provided on a portion of the base material (4) wherein the portion corresponds to a portion other than a principally used portion of the adhesive layer.

2. The laminate sheet roll as set forth in claim 1;
wherein the central portion of the adhesive layer (3) in the widthwise direction thereof is the principally used portion of the adhesive layer, while the protective material (5) is provided on the two sides of the base material (4) in the widthwise direction thereof.

3. A laminate sheet roll formed by winding a laminate sheet (1), the roll comprising;
a long release sheet (2);
an adhesive layer (3) formed on the whole of the release surface of the release sheet (2);
a base material (4) formed on the whole of the adhesive layer (3) ; and
a protective material (5) provided on a portion of the back surface of the release sheet (2) wherein the portion corresponds to a portion other than a principally used portion of the adhesive layer.

4. The laminate sheet roll as set forth in claim 3;
wherein the central portion of the adhesive layer (3) in the widthwise direction thereof is the principally used portion of the adhesive layer (3), while the protective material (5) is provided on the two sides of the back surface of the release sheet (2) in the widthwise direction thereof.

5. A producing method for a laminate sheet roll comprising the steps of;
laminating a long release sheet (2), an adhesive layer (3) and a base material (4) in this order;
laminating, at any step, a protective sheet (5) on the surface of the base material (4) or the back surface of the release sheet (2);
dividing the laminated protective sheet (1) into a portion corresponding to a principally used portion of the adhesive layer and a portion corresponding to a portion other than a principally used portion of the adhesive layer, and removing the portion
corresponding to the principally used portion of the adhesive layer to form a protective material; and then
winding the obtained laminate sheet (1) into a roll.

6. A producing method for a laminate sheet roll comprising the steps of;
laminating a long release sheet (7), an adhesive layer (3) and a base material (4) in this order;
providing, at any step, a protective material (5) on a portion of the surface of the base material (4) or the back surface of the release sheet (2) wherein the portion corresponds to a portion other than a principally used portion of the adhesive layer; and then
winding the obtained laminate sheet (1) into a roll.

## Patentansprüche

1. Laminat-Bahn-Rolle, die durch Aufrollen einer Laminat-Bahn (1) gebildet ist, wobei die Rolle aufweist:
- eine lange Abziehbahn (2);
- eine Klebstoffschicht (3), die auf der ganzen Abziehoberfläche der Abziehbahn (2) gebildet ist;
- ein Basismaterial (4), das auf der ganzen Klebstoffschicht (3) gebildet ist; und
- ein Schutzmaterial (5), das an einem Bereich des Basismaterials (4) vorgesehen ist, wobei der Bereich einem Bereich entspricht, der ein anderer als ein prinzipiell genutzter Bereich der Klebstoffschicht ist.

2. Laminat-Bahn-Rolle nach Anspruch 1, wobei der zentrale Bereich der Klebstoffschicht (3) in dessen Breitenrichtung der prinzipiell genutzte Bereich der Klebstoffschicht ist, während das Schutzmaterial (5) an den zwei Seiten des Basismaterials (4) in dessen Breitenrichtung vorgesehen ist.

3. Laminat-Bahn-Rolle, gebildet durch Aufrollen einer Laminat-Bahn (1), wobei die Rolle aufweist:
- eine lange Abziehbahn (2);
- eine Klebstoffschicht (3), die an der ganzen Abziehoberfläche der Abziehbahn (2) gebildet ist;
- ein Basismaterial (4), das an der ganzen Klebstoffschicht (3) gebildet ist; und
- ein Schutzmaterial (5), das an einem Bereich der rückseitigen Oberfläche der Abziehbahn (2) vorgesehen ist, wobei der Bereich einem Bereich entspricht, der ein anderer als ein prinzipiell genutzter Bereich der Klebstoffschicht ist.

4. Laminat-Bahn-Rolle nach Anspruch 3, wobei der zentrale Bereich der Klebstoffschicht (3) in dessen Breitenrichtung der prinzipiell genutzte Bereich der Klebstoffschicht (3) ist, während das Schutzmaterial (5) an den zwei Seiten der rückseitigen Oberfläche der Abziehbahn (2) in deren Breitenrichtung vorgesehen ist.

5. Herstellungsverfahren für eine Laminat-Bahn-Rolle, das die Schritte aufweist:
- Laminieren einer langen Abziehbahn (2), einer Klebstoffschicht (3) und eines Basismaterials (4) in dieser Reihenfolge;
- Laminieren, bei irgendeinem Schritt, einer Schutzbahn (5) an der Oberfläche des Basismaterials (4) oder der rückseitigen Oberfläche der Abziehbahn (2);
- Teilen der laminierten Schutzbahn (1) in einen Bereich, der einem prinzipiell genutzten Bereich der Klebstoffschicht entspricht, und einen Bereich, der einem Bereich entspricht, der ein anderer als ein prinzipiell genutzter Bereich der Klebstoffschicht ist, und Entfernen des Bereichs, der dem prinzipiell genutzten Bereich der Klebstoffschicht entspricht, um ein Schutzmaterial zu bilden; und dann
- Aufrollen der erhaltenen Laminat-Bahn (1) in eine Rolle.

6. Herstellungsverfahren für eine Laminat-Bahn-Rolle, das die Schritte aufweist:
- Laminieren einer langen Abziehbahn (7), einer Klebstoffschicht (3) und eines Basismaterials (4) in dieser Reihenfolge;
- Bereitstellen, bei irgendeinem Schritt, eines Schutzmaterials (5) an einem Bereich der Oberfläche des Basismaterials (4) oder der rückseitigen Oberfläche der Abziehbahn (2), wobei der Bereich einem Bereich entspricht, der ein anderer als ein prinzipiell genutzter Bereich der Klebstoffschicht ist; und dann
- Aufrollen der erhaltenen Laminat-Bahn (1) in eine Rolle.

## Revendications

1. Rouleau de feuille stratifiée formé en enroulant une feuille stratifiée (1), le rouleau comprenant ;
une longue feuille de séparation (2) ;
une couche adhésive (3) formée sur toute la surface de séparation de la feuille de séparation (2) ;
un matériau de base (4) formé sur toute la couche adhésive (3) ; et
un matériau de protection (5) placé sur une partie du matériau de base (4) dans lequel la partie correspond à une partie autre qu'une partie utilisée principalement de la couche adhésive.

2. Rouleau de feuille stratifié selon la revendication 1 ;
dans lequel la partie centrale de la couche adhésive (3) dans le sens de la largeur de celle-ci est la partie principalement utilisée de la couche adhésive, alors que le matériau de protection (5) est placé sur les deux côtés du matériau de base (4) dans le sens de la largeur de celui-ci.

3. Rouleau de feuille stratifiée formé en enroulant une feuille stratifiée (1), le rouleau comprenant ;
une longue feuille de séparation (2);
une couche adhésive (3) formée sur toute la surface de séparation de la feuille de séparation (2) ;
un matériau de base (4) formé sur toute la couche adhésive (3) ; et
un matériau de protection (5) placé sur une partie de la surface arrière de la feuille de séparation (2) dans lequel la partie correspond à une partie autre qu'une partie utilisée principalement de la couche adhésive.

4. Rouleau de feuille stratifiée selon la revendication 3 ;
dans lequel la partie centrale de la couche adhésive (3) dans le sens de la largeur de celle-ci est la partie principalement utilisée de la couche adhésive (3), alors que le matériau de protection (5) est placé sur les deux côtés de la surface arrière de la feuille de séparation (2) dans le sens de la largeur de celle-ci.

5. Procédé de production d'un rouleau de feuille stratifiée comprenant les étapes consistant à ;
stratifier une longue feuille de séparation (2), une couche adhésive (3) et un matériau de base (4) dans cet ordre ;
stratifier, lors d'une étape quelconque, une feuille protectrice (5) sur la surface du matériau de base (4) ou la surface arrière de la feuille de séparation (2) ;
diviser la feuille de protection stratifiée (1) en une partie correspondant à une partie principalement utilisée de la couche adhésive et une partie correspondant à une partie autre qu'une partie principalement utilisée de la couche adhésive, et enlever la partie correspondant à la partie principalement utilisée de la couche adhésive pour former un matériau protecteur ; et
enrouler la feuille stratifiée (1) obtenue en un rouleau.

6. Procédé de production d'un rouleau de feuille stratifiée (1) comprenant les étapes consistant à ;
stratifier une longue feuille de séparation (7), une couche adhésive (3) et un matériau de base (4) dans cet ordre ;
fournir, lors d'une étape quelconque, un matériau protecteur (5) sur une partie de la surface du matériau de base (4) ou la surface arrière de la feuille de séparation (2) dans lequel la partie correspond à une partie autre qu'une partie principalement utilisée de la couche adhésive ; et ensuite
enrouler la feuille stratifiée (1) obtenue en un rouleau.
